# EUROPEAN PATENT APPLICATION

(11) **EP 1 653 594 A1**
(43) Date of publication of application: **03.05.2006**
(21) Application number: 04771004.1
(22) Date of filing: 21.07.2004
(51) Int. Cl.: H02K 21/22, B62J 6/12

(54) **HUB DYNAMO**

(30) Priority: 25.07.2003 JP 2003280057
(71) Applicant: Mitsuba Corporation, Kiryu-shi, Gunma 376-8555 (JP)
(72) Inventor: Itoi., Kenji MITSUBA CORPORATION, Kiryu-shi, Gunma 3768555 (JP); Minami, H., MITSUBA CORPORATION, Kiryu-shi, Gunma 3768555 (JP); Shirasuna, K., MITSUBA CORPORATION, Kiryu-shi, Gunma 3768555 (JP); Yoda, T., MITSUBA CORPORATION, Kiryu-shi, Gunma 3768555 (JP); Takakusagi, R., MITSUBA CORPORATION, Kiryu-shi, Gunma 3768555 (JP)
(74) Representative: Chameroy, Claude
(86) International application number: PCT/JP2004/010743
(87) International publication number: WO 2005/011092

(57) **Abstract**

A hub dynamo is compacted into a small diameter size while ensuring the generation of a high voltage of electric power. A coil chamber CR formed between a pair of main iron cores 10 is partitioned in the axial direction by three sub iron cores 11 to form a first, second, third and fourth coil chambers (CR-1, 2, 3 and 4); on these coil chambers (CR-1, 2, 3 and 4), one coil wire 13 is wound in order in a state that the winding direction changes alternately; and magnetic flux collectors 15 connected with the outer circumference of the main/sub iron cores 10 and 11 include a first magnetic flux collector 15 connected with the first, third and fifth iron cores (10-1), (11-3) and (10-5) and a second pole piece 15 connected with the second and fourth iron cores (11-2), (11-4), which are disposed alternately.

## Description

### Technical field

The invention pertains to a technical field of a hub dynamo mounted on forks constituting a frame of a bicycle.

### Background Art

Generally, some bicycles are provided with a dynamo on an axle attached to the forks constituting a frame, and with rotation of a wheel which accompanies traveling of a bicycle, electric power is generated and a headlamp lights up using the electric power generated thereby.

A hub dynamo, as an electric power generator, is required to provide a compact size and to ensure a high voltage without increasing the speed. For example, a dynamo as described below has been proposed. That is, at the inner circumference of the rotor (yoke) at the wheel side, permanent magnets are provided in a state that the magnetic polarity changes alternately in the peripheral direction and a stator at the axle side comprises a pair of iron cores, which are so-called claw pole type iron cores including a plurality of magnetic flux collectors (pole pieces) to obtain multipolarity, and a coil (coil wire wound between the iron cores) fitted inside these iron cores(for example, refer to Japanese Published Unexamined Patent Application No. 2991705).

In such a structure, to obtain sufficient generation of electric power even traveling at a slow speed, it is conceivable to arrange the dynamo to be a multipolarity type. However, to arrange the claw pole type dynamo to be a multipolarity type, the diameter thereof has to become larger in size to prevent magnetic saturation and armature reaction. Therefore, there arises a problem that the above conflicts with requests for a reduction in size and weight.

To solve the above problem, there has been proposed the following arrangement. That is, using a coil engaged on the inside thereof between a pair of claw pole type iron cores as a power-generating unit, the plurality of power generating units are juxtaposed with respect to the axle and the permanent magnets provided at the rotor side are elongated in the axial direction so as to face all of the plurality of power generating units. With such a structure, each of these power generating units are individually magnetized to generate the electric power (for example, refer to Japanese Published Examined Utility Model Application No. 2603339).

On the other hand, as a means for obtaining sufficient generation of electric power even traveling at a slow speed, it is conceivable to secure large magnetic flux from the permanent magnets. There has been proposed the following arrangement. That is, a plurality of magnetic flux collectors, which are elongated in the axial direction. These magnetic flux collectors are connected with the outer circumference of a pair of iron cores formed of a ring-like plate member provided at both sides of the coil (for example, refer to Japanese Published Unexamined Patent Application No. Hei-11-34954).

The arrangement disclosed in Japanese Published Examined Utility Model Application No. 2603339 has the following problems. That is, many claw-pole type iron cores must be used in accordance with the number of power generating units resulting in an increase in the number of components and weight accordingly. To uniformly generate the electric power with each of the power generating units, it is indispensable to control the bending angle of the iron core members, the dimension of the pole pieces, warp of the plate members and the like. And further, high precision is required for assembly thereof. Furthermore, when a difference is generated in the distance (gap) between the permanent magnets and pole pieces facing each other, the balance of the electric power generation on each power-generating unit is largely lost.

In contrast, compared to Japanese Published Examined Utility Model Application No. 2603339, the arrangement disclosed in Japanese Published Unexamined Patent Application No. Hei-11-34954 has an advantage that the size can be reduced and the precision of the gap between the magnetic polarity and the magnets on the inner circumference of the yoke is increased. However, in this arrangement, the magnetic flux collectors are supported only by the outer circumference of the iron cores at the both sides of the axle. Therefore, there resides such a problem that magnetic saturation is apt to easily occur at the supporting portion, and the supporting strength is insufficient. In all cases, improvement is required. These are the disadvantages that the present invention intends to solve.

### Disclosure of the Invention

In view of the above-described problems, the present invention has been proposed to solve the disadvantages. The invention in claim 1 is a hub dynamo for a bicycle, having a stator and a rotor, the stator fixed to axle side comprising: a pair of main iron cores formed of a ring-like plate member and disposed at the stator ends to form a coil chamber; at least one sub iron core formed of a ring-like plate member and disposed between the pair of main iron cores facing each other to partition the coil chamber; a coil wire wound in the partitioned coil chambers; and magnetic flux collectors formed of a long member extending between the main iron cores, disposed in parallel with each other in the peripheral direction on the outer circumference of the iron cores, which are closely facing long permanent magnets disposed on the inner circumference of the rotor at the wheel side in a state that the magnetic polarity changes alternately in the peripheral direction; wherein a first magnetic flux collector of the magnetic flux collectors facing one magnetic polarity and a second magnetic flux collector facing the other magnetic polarity are connected to the respective iron cores so as to magnetize the adjacent iron cores to an opposite polarity from each other.

By arranging as described above, the hub dynamo can be reduced in size and weight. And further, a high voltage generation of electric power is obtained; and by providing the main/sub iron cores connected with the magnetic flux collectors, the magnetic path can be shortened by employing a simple structure.

The invention in claim 2 is a hub dynamo for a bicycle, having a stator and a rotor, the stator fixed to the axle side comprising: a pair of main iron cores formed of a ring-like plate member and disposed at the stator ends to form a coil chamber; at least one sub iron core formed of a ring-like plate member and disposed between the pair of main iron cores facing each other to partition the coil chamber; a coil wire wound in the partitioned coil chambers; and magnetic flux collectors formed of a long member extending between the main iron cores, disposed in parallel with each other in the peripheral direction on the outer circumference of the iron cores, which are closely facing long permanent magnets disposed on the inner circumference of the rotor at the wheel side in a state that the magnetic polarity changes alternately in the peripheral direction; wherein a first magnetic flux collector of the magnetic flux collectors facing one magnetic polarity and a second magnetic flux collector facing the other magnetic polarity are connected to the respective iron cores so as to magnetize the adjacent iron cores to an opposite polarity from each other, magnetic paths for the adjacent coil chambers partitioned by the sub iron core are formed by the sub iron core.

By arranging as described above, a well-balanced magnetic flux can be generated in each coil chamber.

The invention in claim 3 is the invention according to Claim 1 or 2, in which the first magnetic flux collector is arranged to be connected to the main iron core at one end side of the axle and the iron cores of every other iron core from the main iron core as a reference, the second magnetic flux collector is arranged to connect to the iron cores unconnected to the first magnetic flux collector. Owing to this arrangement, a plurality of connection points between the magnetic flux collectors and the iron cores is ensured.

The invention in claim 4 is the invention according to any of claims 1 to 3, in which the coil wire wound in each coil chamber is arranged so that the directions of the adjacent winding wires are opposite each other.

The invention in claim 5 is the invention according to any of claims 1 to 4, in which the coil wire wound in each coil chamber is continuously wound in order from the coil chamber at the end side in the axial direction. Owing to this arrangement, separate circuits for connecting the coil wires from the coil chambers are not required.

The invention in Claim 6 is the invention according to any of Claims 1 to 5, in which the magnetic flux collectors are fixed to projecting pieces formed on the outer circumference of each iron core in a manner of caulking. Owing to this arrangement, the magnetic flux collector and the main/sub iron cores can be formed by press working.

The invention in claim 7 is the invention according to claim 6, in which, on the outer circumference of each iron core, a concave portion is formed between the convex portions adj acent in the peripheral direction and each of the iron cores adjacent in the axial direction is disposed in a state that the convex portion and the concave portion face each other in the axial direction. Owing to this arrangement, the magnetic flux collector and the main/sub iron cores are connected to each other without increasing the size.

The invention in claim 8 is the invention according to claim 7, in which, in each of the iron cores, a long pull-out groove for pulling out the coil wire to the outside is formed in the diameter direction and the pull-out groove is formed in a position formed with the concave portion. Owing to this arrangement, wiring can be made effectively by using a portion which is free of interference between the magnetic flux collector and the coil wire.

The invention in claim 9 is the invention according to any of claims 1 to 8, in which the magnetic flux collector is a long plate member and the pole pieces of which the width direction of the plate member is oriented to the peripheral direction with respect to the iron core and subsidiary ion core are connected with the plate width direction oriented to the peripheral direction of the first iron core with respect to the first iron core. Owing to this arrangement, the size of the hub dynamo can be reduced.

The invention in Claim 10 is the invention according to claim 9, in which the magnetic flux collector is formed so that the cross-sectional area thereof becomes larger toward a connecting portion with the iron core. Owing to this arrangement, the magnetic flux from the magnets can be effectively collected, and thus a stable electric power can be supplied.

The invention in Claim 11 is the invention according to claim 9 or 10, in which the magnetic flux collector is formed so that the width of the plate becomes wider toward a connecting portion with the iron core. Owing to this arrangement, a high performance hub dynamo with a simple structure can be provided.

The invention in claim 12 is the invention according to any of claims 1 to 11, in which the sub iron core is constituted of a plurality of laminated thin plate members. Owing to this arrangement, compared to the case where the sub iron core is formed of a single plate member, eddy current loss can be reduced and the sub iron core can be uniformly caulked with the magnetic flux collectors.

The invention in claim 13 is the invention according to any of claims 1 to 12, in which the main iron core is constituted of a plurality of laminated thin plate members. Owing to this arrangement, compared to the case where the sub iron core is formed of a single plate member, eddy current loss can be reduced and the sub iron core can be uniformly caulked with the magnetic flux collectors.

According to the invention of claim 1, the loss relevant to the generation of electric power can be reduced and the efficiency in power generation can be increased.

According to the invention of claim 2, a hub dynamo superior in generating electric power can be obtained.

According to the invention of claim 3, magnetic saturation can be reduced.

According to the invention of claim 4, a troublesome wiring circuit for the coil wire is not necessary to form.

According to the invention of claim 5, the structure can be simplified and compacted.

According to the invention of claim 6, the cost can be reduced.

According to the invention of claim 7, the magnetic flux collectors and the main/sub iron cores can be connected with each other without increasing the size.

According to the invention of claim 8, a portion which is free from interference between the magnetic flux collector and the coil wire can be effectively used.

According to the invention of claim 9, the size of the hub dynamo can be reduced.

According to the invention of claim 10, the magnetic flux from the magnets can be efficiently collected and the electric power can be stably supplied.

According to the invention of claim 11, a hub dynamo of a simple structure and high performance can be provided.

According to the invention of claim 12, the efficiency in power generation of the hub dynamo is not reduced.

According to the invention of claim 13, the efficiency in power generation of the hub dynamo is not reduced.

### Brief Description of the Drawings

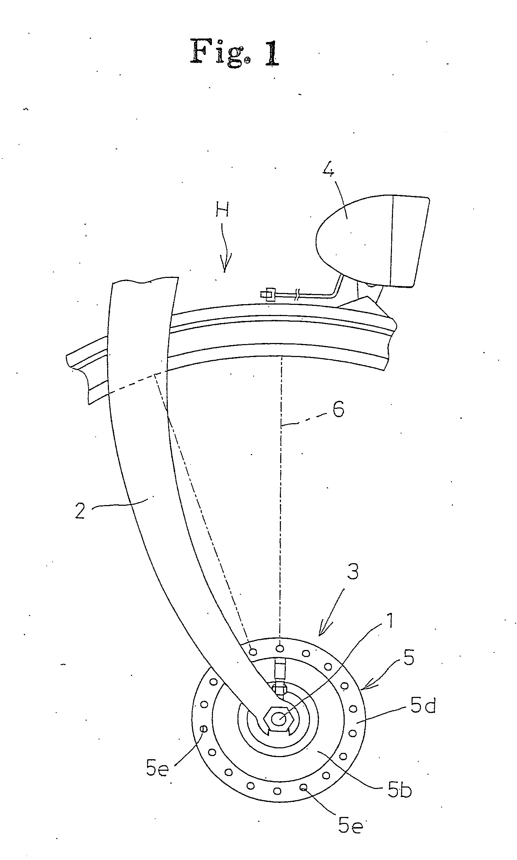

Fig. 1 is a partial side view of a front wheel of a bicycle;
Figs. 2 (A) and 2 (B) are a side view of a first iron core, and an exploded perspective view of components of a stator coil, respectively;
Fig. 3 is a front sectional view of a hub dynamo;
Figs. 4(A) and 4(B) are front views in which a stator core is developed; Figs. 4(A) is a partial front view illustrating a first magnetized state, and Figs. 4(B) is a partial front view illustrating a second magnetized state, respectively;
Fig. 5 is a sectional view illustrating a magnetic path in the hub dynamo;
Fig. 6 is a front sectional view of a hub dynamo according to a second embodiment;
Figs. 7(A) and 7(B) are a front view and a bottom view each showing a magnetic flux collector in a third embodiment;
Figs. 8(A), 8(B) and 8(C) are a front view, a side view and a side view respectively of a stator in the third embodiment; and
Fig. 9 is a front view of a hub dynamo according to the third embodiment.

### Best Mode for Carrying Out the Invention

A first embodiment of the present invention will be described below with reference to drawings.

In the figures, reference numeral 1 denotes an axle constituting the rotational center of a front wheel H of a bicycle. The right and left ends of the axle 1 are supported by a pair of right and left front forks 2, and a hub dynamo 3 is disposed on the axle 1 between the right and left front forks 2.

Reference numeral 4 denotes a headlamp connected with the hub dynamo 3 so as to light up receiving the electric power from the hub dynamo 3.

Reference numeral 5 denotes a casing (hub) constituting the hub dynamo 3. The casing 5 comprises a cylindrical mainframe 5a, which is fitted over the axle 1 and a pair of right and left end brackets 5b disposed integrally in a state of covering the openings of the cylinder formed at the both ends in the axial direction of the main frame 5a. The end bracket 5b is formed of a ring-like plate member, and attached to the axle 1 rotatably relative to the axle 1 via bearings 5c, which is provided on the outer circumference of a spacer 1a integrally fitted over the axle 1. The mainframe 5a is further formed with collars 5d positioned at the both ends in the axial direction and protruding toward the outer diameter side. These collars 5d are formed with a plurality of through holes 5e in the peripheral direction thereof. The end portion at the inner side of spokes 6, which constitutes the front wheel H, are integrally connected to these through holes 5e. Reference numeral 7 denotes come-out prevention members, which are provided to the outside of the both ends of a pair of right and left end brackets 5b in the axial direction.

On the inner circumference of the casing body 5a, a cylindrical yoke 8 is integrally disposed. For the inner circumference of the yoke 8, a plurality of pairs of permanent magnets 8a having an N-polarity and S-polarity, which are formed long in the axial direction and fixed in a state being aligned in the peripheral direction are provided. Thus, the rotor of the hub dynamo 3 is structured.

In this embodiment, there are provided fourteen pairs; i.e., a total of twenty-eight permanent magnets 8a in a state that the magnetic polarity changes alternately. It is arranged so that, when the bicycle travels, the front wheel H rotates; and the casing 5 (main frame 5a and end brackets 5b) rotates with respect to the axle 1 along with the front wheel H; thereby the permanent magnets 8a on the inner circumference of the mainframe 5a rotate with respect to the axle 1.

On the other hand, in the portion of the axle 1 disposed within the casing 5, a stator is provided. In that portion of the axle 1, a cylindrical pipe member 9 for reinforcing the axle 1 is integrally fitted over the axle 1 and on the both ends thereof, come-out prevention members 9a are provided. In this state, the pipe member 9 is positioned in the axial direction and come-out prevention measures are given thereto. Ring-like main iron cores 10, which are formed of a magnetic material, are fitted over the outer circumference at the both ends of the pipe member 9 and a coil chamber CR is formed between these main iron cores 10. Further, the coil chamber CR is partitioned by at least one sub iron cores 11 disposed between the main iron cores 10, thereby forming a plurality of coil chambers CR.

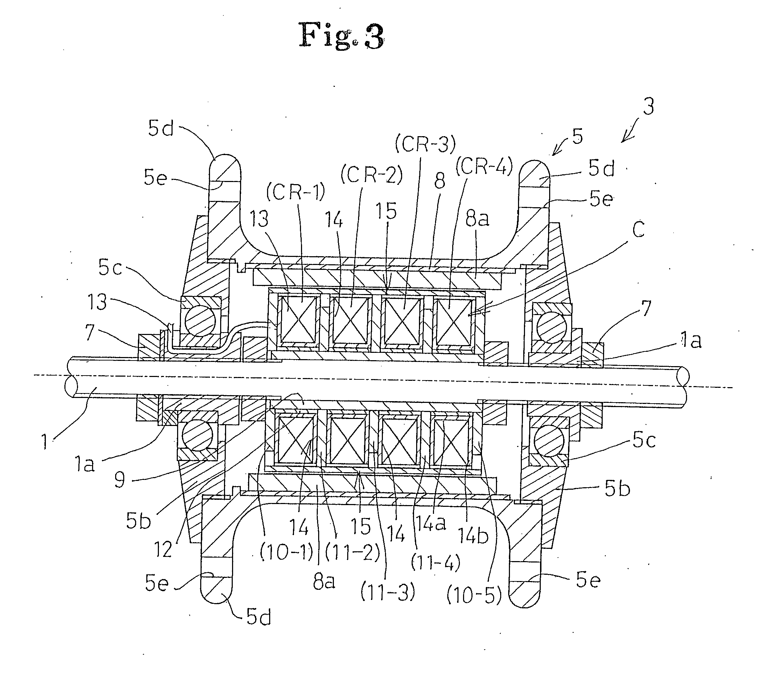

In this embodiment, as shown in Fig. 3, three sub iron cores 11 are provided between the main iron cores 10 facing each other in the axial direction to partition the outer circumference portion around the axle 1 (pipe member 9), thereby forming respectively a first, a second, a third and a fourth coil chambers CR-1, CR-2, CR-3 and CR-4 from the left.

Reference numeral 12 denotes cylindrical bodies for connecting the inner diameter side edges between the adjacent main/sub iron cores 10, 11. The cylindrical bodies 12 are formed of a magnetic material, which form a magnetic path in the axial direction at the inner circumference side of the coil chambers CR-1, CR-2, CR-3 CR-4. However, when substituted with axle 1, the pipe member 9 and the cylindrical bodies 12 may not necessarily be provided.

Steps of assembling the stator will be described.

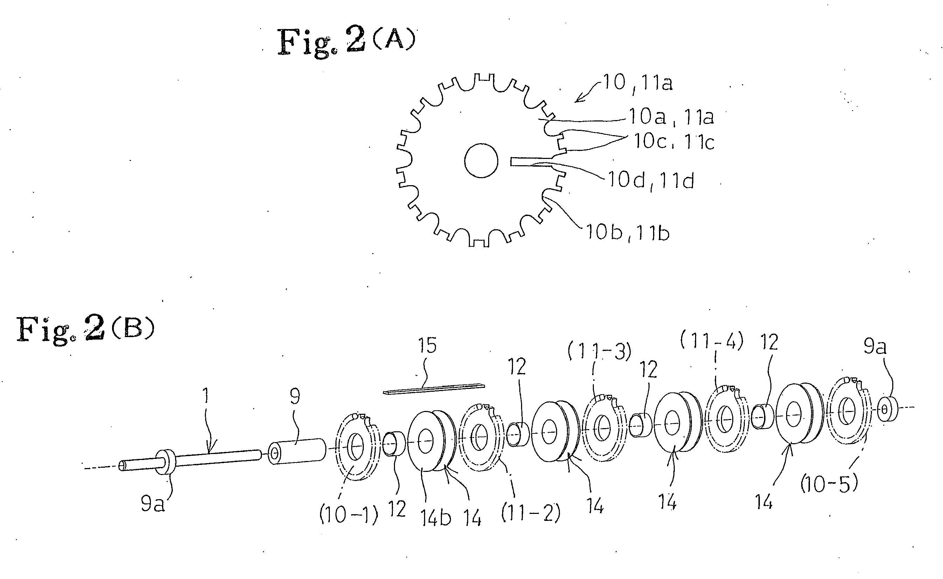

First, the come-out prevention member 9a is fitted over the axle 1 on one end in the axial direction (as shown on left side in the Fig. 2 (B)); and then, a main iron core 10-1 is inserted as a first iron core positioned at the one end side so as to abut against the come-out prevention member 9a. Then, the cylindrical body 12 is inserted so as to abut against the first main iron core 10-1. And a coil bobbin 14 for winding coil wire 13 is fitted over the outer circumference of the cylindrical body 12 to form a first coil chamber CR-1. The coil bobbin 14 comprises a cylindrical portion 14a, which is fitted over the cylindrical body 12, and flanges 14b extending toward the outer diameter side from the both ends of the cylindrical portion 14a.

Next, a sub iron core 11-2, which is disposed between the main iron cores 10, is inserted as the second iron core. It is arranged so that, the second sub iron core 11-2 is inserted so as to abut against the coil flange portion 14b of the first coil chamber CR-1; and then, using the same assembling procedure as described above, a cylindrical body 12 for the second coil chamber CR-2 and a coil bobbin 14, a sub iron core 11-3 as a third iron core, a cylindrical body 12 for the third coil chamber CR-3 and a coil bobbin 14, a sub iron core 11-4 as a fourth iron core, a cylindrical body 12 for a fourth coil chamber CR-4 and a coil bobbin 14, and a main iron core 10-5 as a fifth iron core are inserted in that order. And finally, the come-out prevention member 9a is inserted onto the other end in the axial direction.

Then, one coil wire 13 is continuously wound on the four coil bobbins 14 attached as described above, to form a coil C. On the coil bobbin 14 of the first coil chamber CR-1, the coil wire 13 is wound in a predetermined winding direction; on the coil bobbin 14 of the second coil chamber CR-2, the coil wire is wound in a winding direction opposite the above winding direction; then on the coil bobbin 14 of the third coil chamber CR-3, the coil wire is wound in the same winding direction as that on the coil bobbin 14 of the first coil chamber CR-1; and then on the coil bobbin 14 of the fourth coil chamber CR-4, the coil wire is wound in the same winding direction as that on the coil bobbin 14 of the second coil chamber CR-2. As a result, the coil wire 13 is wound on the respective coil bobbins 14 in the winding directions opposite each other.

In the above-described attached state, the dimension of the main/sub iron cores 10, 11 is set so that the outer diameter thereof is larger than the outer diameter of the coil bobbin 14. On the peripheral edge of the main/sub iron cores 10, 11, convex portions 10a, 11a are formed at fourteen points at the same intervals in the peripheral direction. By forming the convex portions 10a, 11a, concave portions 10b, 11b are alternately formed at fourteen points at a (360/28)° pitch between the adjacent convex portions 10a, 11a in the peripheral direction. Further, on the outer end of the convex portions 10a, 11a, a pair of opposing projecting pieces 10c, 11c are formed in the peripheral direction respectively. The first main iron core 10-1, which is positioned at one end side in the axial direction, the third sub iron core 11-3 and the fifth main iron core 10-5, which is positioned at the other end side in the axial direction, are disposed in such positioning that the projecting pieces 10c, 11c take the same (synchronous)position as each other in the peripheral directions. The positions of the projecting pieces 11c of the second sub iron core 11-2 and the fourth sub iron core 11-4 in the peripheral direction are positioned opposite the concave portions 10b, 11b of the first main iron core 10-1, the third sub iron core 11-3 and the fifth main iron core 10-5, that is, the projecting pieces 11c of the second sub iron core 11-2 and the fourth sub iron core 11-4 are displaced in the peripheral direction by an angle of (360/28) (1 pitch angle) with respect to the respective projecting pieces 11c of the first main iron core 10-1, the third sub iron core 11-3 and the fifth main iron core 10-5.

Reference numerals 10d, 11d denote a pull-out groove for guiding the coil wire 13 wound on each coil bobbin 14 to the adjacent coil bobbin 14.

On the outer circumference of the coil C assembled as described above, a plurality of magnetic flux collectors 15 for collecting magnetic flux by receiving magnetic polarity from the permanent magnets 8c on the inner circumference of the yoke 8 are disposed in parallel with each other in the peripheral direction. The magnetic flux collectors 15 are formed of a long plate member of a magnetic material. 28 collectors are disposed, of which number is the same as that of the permanent magnets 8a. The plate of the magnetic flux collectors 15 is set to have a length from the first main iron core 10-1 to the fifth main iron core 10-5 facing the first to fourth coil chambers CR-1 , CR-2, CR-3, CR-4. The width of the magnetic flux collectors 15 is set to be larger than the thickness of the plate and formed to have substantially the same dimension of the facing gap on the main/sub iron core projecting pieces 10c, 11c in the peripheral direction, and fixed to these projecting pieces 11c by means of caulking.

Here, as described above, the projecting pieces 10c, 11c of the first, third and fifth iron cores 10-1, 11-3 and 10-5 and the projecting pieces 11c of the second and the fourth iron cores 11-2, 11-4 are positioned at the same position in the peripheral direction; and further these projecting pieces 10c, 11c are disposed in a state being displaced by 1 pitch angle of each other. Therefore, for example, assuming that a magnetic flux collector 15 at an arbitrary position in the peripheral direction is the first magnetic flux collector 15-1 (equivalent to the first magnetic flux collector in the present invention), it is arranged so that, when the first magnetic flux collector 15-1 is fixed by caulking to the iron cores of every other iron core from the first iron core 10-1 as a reference; i.e. , to the projecting pieces 10c, 11c of the first, third and fifth iron cores 10-1, 11-3, 10-5, the second magnetic flux collector 15-2 (equivalent to the second magnetic flux collector in the present invention) adjacent to the first magnetic flux collector 15-1 is fixed by caulking to the iron core other than the first, third, fifth iron cores 10-1, 11-3, 10-5; i.e., to the projecting piece 11c of the second, fourth iron cores 11-2, 11-4. As a result, the first to 28th magnetic flux collectors 15-1 to 15-28 are disposed so that the first magnetic flux collector 15 is fixed by caulking to connect (join) to the first, third and fifth iron cores 11-1, 11-3, 11-5 and positioned closer to a permanent magnet 8a of one magnetic polarity facing thereto to be magnetized, and the second magnetic flux collector 15 is connected (joined) to the second and fourth iron cores 11-2, 11-4 and positioned closer facing a permanent magnet 8a of the other magnetic polarity to be magnetized. Accordingly the first magnetic flux collector 15 and the second magnetic flux collector 15 are disposed alternately in the peripheral direction and further, these iron cores 10, 11 connected to the magnetic flux collectors are arranged so that the adjacent iron cores 10, 11 are magnetized to a polarity different from each other.

In the stator structured as described above, each of the coil chambers CR-1, CR-2, CR-3, CR-4 is enclosed by the magnetic flux collectors 15, the main and sub iron cores 10, 11 and the cylindrical body 12. The stator is arranged so that the magnetic flux, which is collected by a magnetic flux collector 15, flows to a magnetic flux collectors 15 through a magnetic path formed in the diameter direction by the main/sub iron cores 10, 11, an inner diameter portion magnetic path in the axial direction formed by the cylindrical body 12 and a magnetic path in the diameter direction formed by the main/sub iron cores 10, 11 adjacent to the main/sub iron cores 10, 11. With this arrangement, magnetic paths for the adj acent coil chambers CR-1 , CR-2, CR-3, CR-4 partitioned by the sub iron cores 11 are formed by the sub iron cores 11 therebetween. Thus, the sub iron cores 11 are arranged so as to share the magnetic paths for the adjacent coil chambers CR-1, CR-2, CR-3, CR-4.

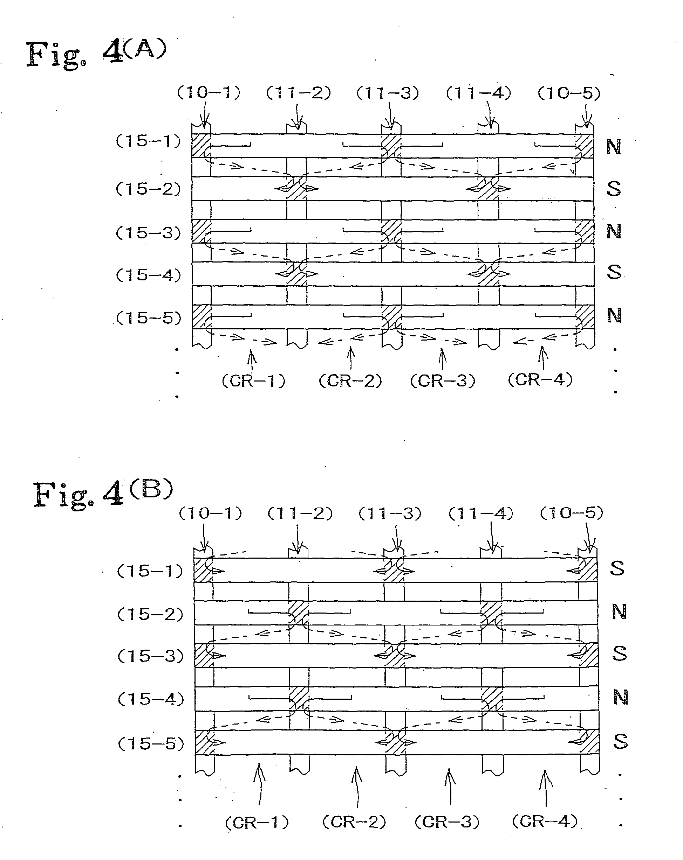

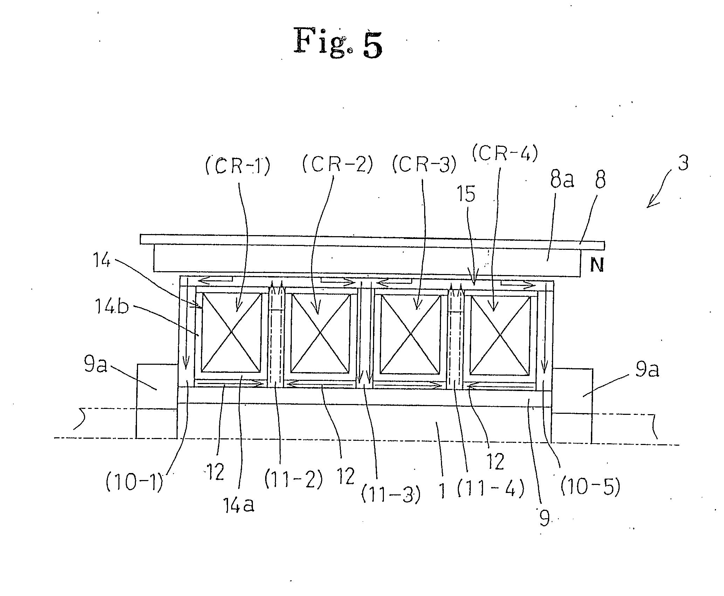

In the hub dynamo 3 structured as described above, when the casing 5 rotates, the 14-pair permanent magnets 8a, which are provided on the inner circumference of the yoke 8, rotate respectively with respect to the coil C formed by the coil wire 13 , which is wound in each of the first to fourth coil chambers CR-1 , CR-2, CR-3, CR-4 enclosed by the magnetic flux collectors 15, the main/sub iron cores 10, 11 and the cylindrical body 12. Accompanying this, electric power is generated on the coil wire 13 in each coil chamber CR-1 , CR-2, CR-3, CR-4, thus the electric power is generated on the coil C. The mechanism of generation of the electric power will be described with reference to a developed view of the stator shown in Fig. 4 and a sectional view of the stator shown in Fig. 5.

The elongated plate magnetic flux collectors 15 are arranged so as, when the yoke 8 rotates along with the casing 5 in accordance with rotation of the front wheel H, accompanying the rotation by one pitch angle, to face the permanent magnets 8a and are magnetized to N-polarity and S-polarity alternately.

As illustrated in Fig. 4 (A), it is arranged so that, when the first magnetic flux collector 15-1 faces permanent magnet 8a with N-polarity and is connected to each of the first, third and fifth iron cores 10-1, 11-3, 10-5, the second magnetic flux collector 15-2 faces permanent magnet 8a with S-polarity and is connected to the second and fourth iron cores 11-2, 11-4. In this case, the first, third and fifth iron cores 10-1, 11-3, 10-5 are magnetized to N-polarity; and the second and fourth iron core 11-2, 11-4 are magnetized to S-polarity, that is, a first magnetized state is caused.

In this state, as shown in Fig. 4 (A) or Fig. 5, a counterclockwise magnetic path (Refer to Fig. 5) is respectively formed around the first or third coil chamber CR-1 or CR-3 from the first or third iron cores 10-1 or 11-3 connected to the first magnetic flux collector 15-1, which is magnetized to N-polarity to the second or fourth iron core 11-2 or 11-4 via the cylindrical body 12. Thus, magnetic flux of negative direction flows through the first or third coil chamber CR-1 or CR-3.

On the other hand, a clockwise magnetic path (Refer to Fig. 5) is respectively formed around the second or fourth coil chamber CR-2 or CR-4 from the third or fifth iron core 11-3 or 10-5 connected to the first magnetic flux collector 15-1 magnetized to N-polarity to the second or fourth iron core 11-2 or 11-4 via the cylindrical body 12. As a result, magnetic flux of positive direction flows to the second or fourth coil chamber CR-2 or CR-4.

Contrary to this, in a state that a rotation has been made by one pitch angle from the above described state, as shown in Fig. 4(B), the first magnetic flux collector 15-1 faces a permanent magnet 8a with S-polarity, and is connected to the first, third and fifth iron cores 10-1, 11-3, 10-5, the second magnetic flux collector 15-2 faces a permanent magnet 8a with N-polarity, and is connected to the second and fourth iron cores 11-2, 11-4. Here, the first, third and fifth iron cores 10-1, 11-3, 10-5 are magnetized to S-polarity, and the second and fourth iron cores 11-2, 11-4 are magnetized to N-polarity, that is, a second magnetized state is caused. In this state, as shown in Fig. 4 (B), around the first or third coil chamber CR-1 or CR-3, a clockwise magnetic path is respectively formed from the second or fourth iron core 11-2 or 11-4 connected to the second magnetic flux collector 15-2, which is magnetized to N-polarity, to the first or third iron core 10-1 or 11-3 via the cylindrical body 12. As a result, a magnetic flux of positive direction flows through the first or third coil chamber CR-1 or CR-3.

On the other hand, around the second or fourth coil chamber CR-2 or CR-4, a counterclockwise magnetic path is respectively formed from the second or fourth iron core 11-2 or 11-4 connected to the second magnetic flux collector 15-1, which is magnetized to N-polarity, to the third or fifth iron core 11-3 or 10-5 via the cylindrical body 12. As a result, a magnetic flux of negative direction flows to the second or fourth coil chamber CR-2 or CR-4.

As described above, when the first magnetized state and the second magnetized state are repeated alternately, electric power is generated on the coil wire 13 in the first to fourth coil chambers CR-1, CR-2, CR-3, CR-4. In this case, the coil wire 13 in the coil chambers CR-1, CR-2, CR-3, CR-4 continues in a state that the winding direction of the single coil wire 13 changes alternately. As a result, the electric power generated on the coil C is obtained in a state having a high voltage.

In the embodiment of the present invention constituted as described above, the coil C constituting the hub dynamo 3 is composed of the coil wire 13, which is wound in the first to fourth coil chambers CR-1, CR-2, CR-3, CR-4 partitioned by the sub iron cores 11. The magnetic flux collectors 15 are not constituted of a claw pole type, but constituted of long plate members supported by the main/sub iron cores 10, 11. In the coil C constituted of the coil wire 13 wound in each of the coil chambers CR-1, CR-2, CR-3, CR-4, the electric power is generated on each coil chamber CR-1, CR-2, CR-3, CR-4, and in the middle portion of the long magnetic flux collectors 15 disposed between the main iron cores 10, sub iron cores 11 are connected thereto to reduce the distance of the magnetic path. Therefore, the loss can be reduced and the efficiency in power generation can be increased.

Further, the magnetic flux collectors 15, which have a length equivalent to the full length of the stator (extend between the facing main iron cores 10), are disposed in parallel to each other in the peripheral direction. Therefore, the gaps between the magnetic flux collectors 15 can be uniformly maintained in any portion in the longitudinal direction of the stator. And further, being connected with the iron cores 10, 11 to be supported thereby, sufficient supporting strength can be obtained. Accordingly, the stator can be constructed in multipolarity without increasing the outer diameter of the stator; thus a lightness in weight and compaction can be achieved. As a result, lightness in weight and compaction can be achieved without changing the efficiency in power generation. Not only superior in the aspect of design, but also electric power can be generated with a light load while traveling on a bicycle.

Furthermore, in this embodiment, even when the gap between the permanent magnets 8a and the magnetic flux collectors 15 varies depending on the position of the connection portion between the magnetic flux collectors 15 and the respective iron cores 10, 11, or the connection is insufficient due to a dimensional error of the magnetic flux collectors 15, a warp of the magnetic flux collectors 15, dimensional error of the respective iron cores 10, 11 or the like, the magnetic flux collectors 15 face the permanent magnets 8a in a state extending in full length of the stator to balance the magnetic flux in the longitudinal direction. Further, since the plurality of long first and second magnetic flux collectors 15 are arranged so as to connect respectively on the outer circumference of the iron cores 10 and 11, which have the same polarity, the magnetic paths for the coil chambers CR-1, CR-2, CR-3, CR-4 are shared by the adjacent chambers. Therefore, the magnetic flux is generated being well balanced in the coil chambers CR-1, CR-2, CR-3, CR-4. Accordingly, a high performance hub dynamo is achieved capable of functioning without decreasing the efficiency in power generation.

Further, the hub dynamo according to the invention is structured so that the magnetic flux collectors 15 are connected with the corresponding main and sub iron cores 10, 11 to be supported thereby. Therefore, as the connection portions between the magnetic flux collectors 15 and the main/sub iron cores 10, 11, the first magnetic flux collector 15 has three connection points; the second magnetic flux collector 15 has two connection points. Accordingly, the magnetic saturation can be reduced and the magnetic flux collectors 15 can be stably supported.

Still further, in this case, between the respective coil chambers CR-1, CR-2, CR-3, CR-4, the second, third and fourth iron cores 11-2, 11-3, 11-4 are positioned. These second, third and fourth iron cores 11-2, 11-3, 11-4 serve as the magnetic paths for the adjacent coil chambers CR. Therefore, the component members can be shared therebetween resulting in a reduction in the number of the component parts, simplification of the structure and further, a cost reduction. Furthermore, it is arranged so that one coil wire 13 is pulled out to the adj acent coil chamber CR through the pull out grooves 10d, 11d. Therefore, the coil wire 13 does not have to be provided separately for each coil chamber CR. Accordingly, the structure can be further simplified and compacted.

Further, in this embodiment, the magnetic flux collectors 15 and the main/sub iron cores 10, 11 are connected with each other by fixing in a manner of caulking using the projecting pieces 10c, 11c formed on the main/sub iron cores 10, 11. Therefore, the magnetic flux collectors 15 and the main/sub iron cores 10, 11 can be formed by press working resulting in a further cost reduction.

Further, in this embodiment, each of the main/sub iron cores 10, 11 are formed with the convex portions 10a, 11a and the concave portions 10b, 11b alternately. Using the convex portions 10a, 11a, the magnetic flux collectors 15 are connected; and using the concave portions 10b, 11b, the connected magnetic flux collectors 15 can be recessed. Therefore, the hub dynamo is prevented from becoming larger in size.

Further, the main/sub iron core 10, 11 is formed with the pull-out groove 10d, 11d for pulling out the coil wire 13 to the adjacent coil chamber CR or to the outside. Since the pull-out groove 10d, 11d is formed in a portion where the concave portion of the main/sub iron cores 10b, 11b face each other, the wiring can be effectively made using a portion where the magnetic flux collectors 15 and the coil wire 13 do not interfere with each other. Efficiency in assembly work of the magnetic flux collectors 15 can be increased.

Further, in this embodiment, the magnetic flux collectors 15 are fixed in a manner of caulking in a state that the plate width direction is oriented to the peripheral direction of the main/sub iron cores 10, 11 with respect to the main/sub iron cores 10, 11. Therefore, the size of the hub dynamo can be further reduced and compacted accordingly.

As a matter of course, the present invention is not limited to the above-described embodiment. Unlike this embodiment, not limiting the number of the coil chambers formed at the axle side to four, such a constitution that an appropriate number of chambers (2, 3, 5, 6 ...) are formed may be employed. In this case also, by employing such a constitution that only one coil wire is wound in the coil chambers and the winding direction is changed alternately, a high voltage electric power can be generated the same as in the case of the first embodiment. Further, the number of permanent magnets is not limited to 14 pairs; or the number of pole pieces is not limited to 28. In accordance with the conditions such as required voltage or the like, an appropriate number of coils and magnetic poles can be selected.

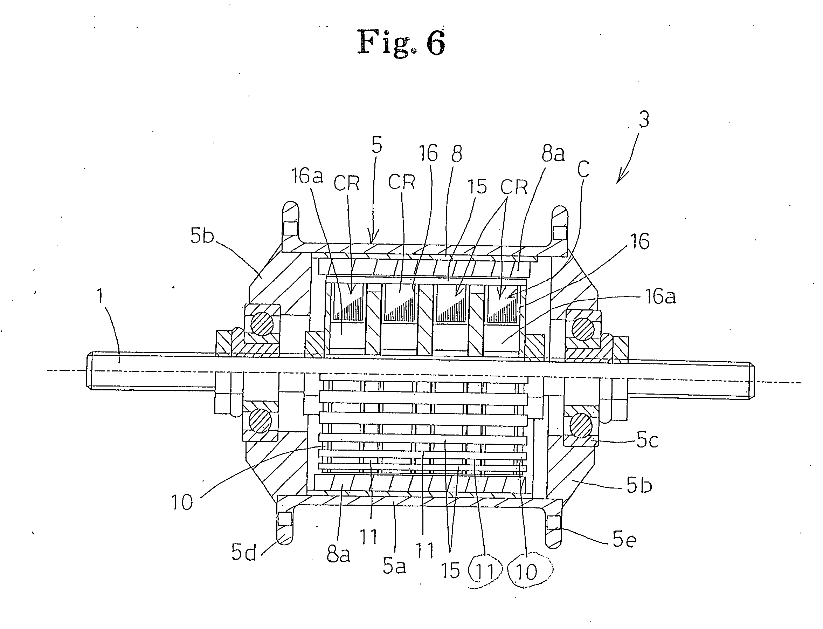

Next, a second embodiment will be described in reference to Fig. 6. In this embodiment, spacer portions 16a are formed on the inner diameter portion of the coil bobbin 16 so as to allow the coil chamber CR to displace toward the outer diameter side portion.

Further, unlike the above embodiment, the sub iron cores are not formed of one plate member, but may be formed by laminating a plurality of thin plate members. In this case, compared to the iron core of the single plate member, eddy current loss can be reduced; thus, the efficiency in power generation can be prevented from being reduced. Additionally, when fixing the magnetic flux collectors to the sub iron cores in a manner of caulking, the fixing force at the fixing portions can be uniformed. Thus, a highly reliable hub dynamo can be obtained. Further, the main iron core can also be formed by laminating a plurality of thin plate members the same as the sub iron cores. In this case also, the same effect can be obtained.

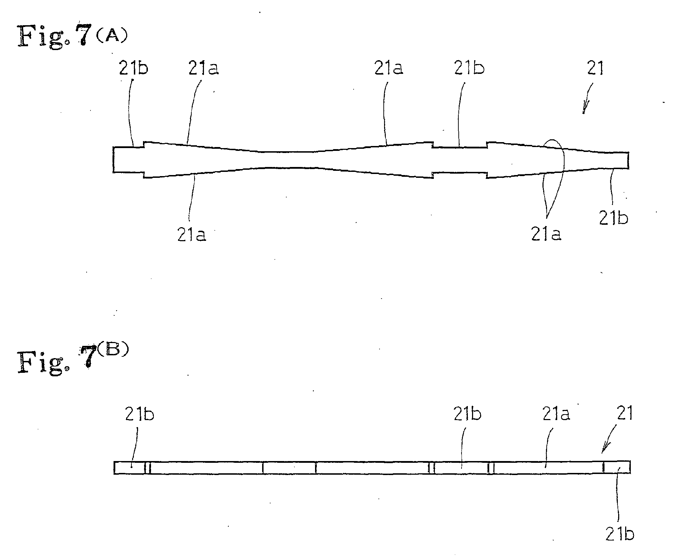

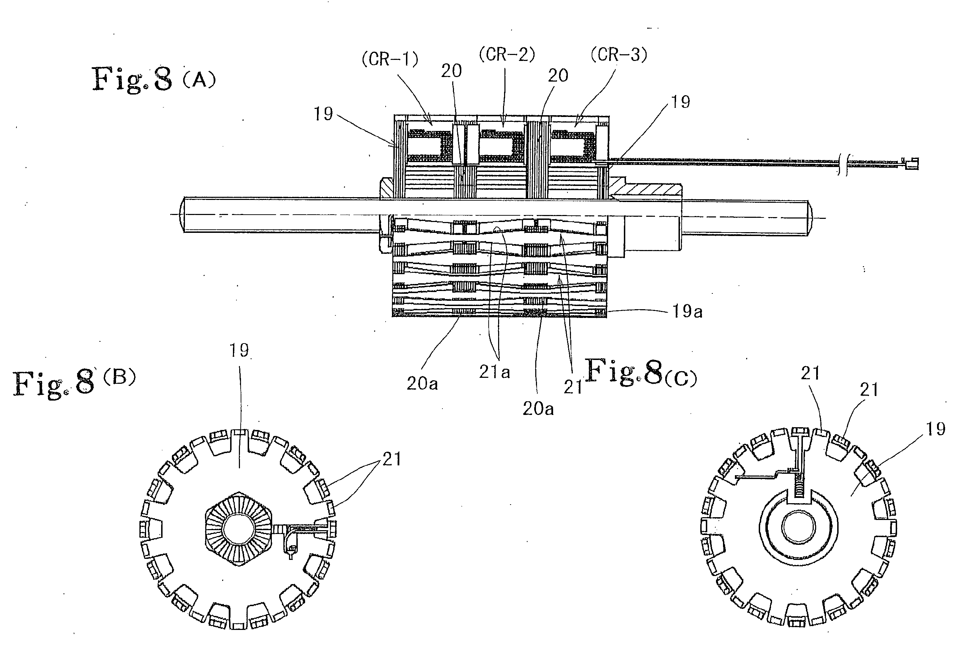

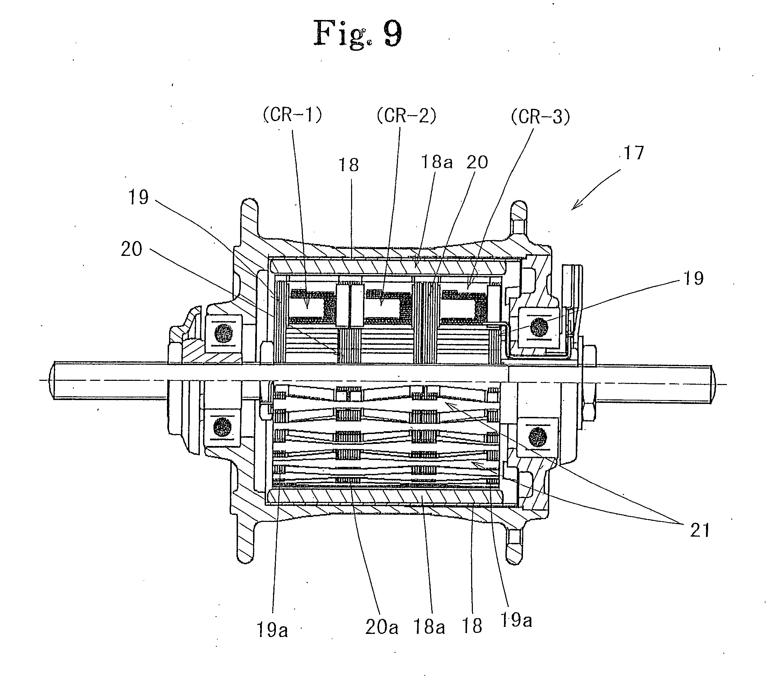

Also, an arrangement according to a third embodiment as shown in Fig. 7 to Fig. 9 is possible. In a hub dynamo 17 according to this embodiment, the basic constitution is the same as that of the above-described embodiments. That is, 14-pair of permanent magnets 18a are provided to the inner circumference of the yoke 18, and between the main iron cores 19 facing each other, two sub iron cores 20 are provided to form first to third coil chambers CR-1, CR-2, CR-3. In this embodiment, the main/sub iron cores 19, 20 are constructed of a plurality of laminated plate members 19a and 20a to increase the efficiency in power generation. Further, in this embodiment, the same as in the case of the above-described embodiments, 28 magnetic flux collectors 21, which are connected to the outer circumference of the respective iron cores 19, 20 are connected to the adjacent iron cores 19 and 20 so as to be magnetized to a polarity different from each other. Here, the magnetic flux collector 21 includes inclined portions 21a where the width is formed wider at the connection portion side with the main/sub iron cores 19, 20, and in the portions where the connection portions with the iron cores 19, 20 are formed to a predetermined width in the narrow portion 21b. Owing to this, it is arranged so that, when connected with the main/sub iron cores 19, 20 being fixed in a manner of caulking, the cross-sectional area of the magnetic flux collector 21 of the connection portion vicinity is formed larger. Owing to this arrangement, the amount of magnetic flux from the iron cores 19, 20 can be effectively collected to the magnetic flux collector 21. Thus, the efficiency in power generation can be further increased and the electric power can be supplied stably.

### Industrial Applicability

As described above, the hub dynamo according to the present invention is useful as the electric power source for lighting the headlamp of a bicycle. In particular, the hub dynamo can be made compact while reducing the loss in the generation of electric power. Therefore, the hub dynamo increases the efficiency in power generation and is suitable for use as an electric power generator for bicycles.

## Claims

1. A hub dynamo for a bicycle, having a stator and a rotor,
the stator fixed to the axle side comprising:
a pair of main iron cores formed of a ring-like plate member and disposed at the stator ends to form a coil chamber;
at least one sub iron core formed of a ring-like plate member and disposed between the pair of main iron cores facing each other to partition the coil chamber;
a coil wire wound in the partitioned coil chambers; and
magnetic flux collectors formed of an elongated member extending between the main iron cores, disposed in parallel with each other in the peripheral direction on the outer circumference of the iron cores, which are closely facing elongated permanent magnets aligned and disposed on the inner circumference of the rotor at the wheel side in a state that the magnetic polarity changes alternately in the peripheral direction;
wherein a first magnetic flux collector of the magnetic flux collectors facing one magnetic polarity and a second magnetic flux collector facing the other magnetic polarity are connected to the respective iron cores so as to magnetize the adjacent iron cores to an opposite polarity from each other.

2. A hub dynamo for a bicycle, having a stator and a rotor,
the stator fixed to axle side comprising:
a pair of main iron cores formed of a ring-like plate member and disposed at the stator ends to form a coil chamber;
at least one sub iron core formed of a ring-like plate member and disposed between the pair of main iron cores facing each other to partition the coil chamber;
a coil wire wound in the partitioned coil chambers; and
magnetic flux collectors formed of an elongated member extending between the main iron cores, disposed in parallel with each other in the peripheral direction on the outer circumference of the iron cores, which are closely facing elongated permanent magnets disposed on the inner circumference of the rotor at the wheel side in a state that the magnetic polarity changes alternately in the peripheral direction;
wherein a first magnetic flux collector of the magnetic flux collectors facing one magnetic polarity and a second magnetic flux collector facing the other magnetic polarity are connected to the respective iron cores so as to magnetize the adjacent iron cores to an opposite polarity from each other,
magnetic paths for the adjacent coil chambers partitioned by the sub iron core are formed by the sub iron core.

3. The hub dynamo according to claim 1 or 2, wherein the first magnetic flux collector is connected to the main iron core at one end side of the axle and the iron cores of every other iron core with respect to the main iron core,
the second magnetic flux collector is connected to the iron cores unconnected to the first magnetic flux collector.

4. The hub dynamo according to any of claims 1 to 3, wherein the coil wire wound in each coil chamber is arranged so that the directions of the adjacent winding wires are opposite each other.

5. The hub dynamo according to any of claims 1 to 4, wherein the coil wire wound in each coil chamber is continuously wound in order from the coil chamber at the end side in the axial direction.

6. The hub dynamo according to any of claims 1 to 5, wherein the magnetic flux collectors are fixed to projecting pieces formed on the outer circumference of each iron core by means of caulking.

7. The hub dynamo according to claim 6, wherein, on the outer circumference of each iron core, a concave portion is formed between the convex portions adjacent in the peripheral direction and each of the iron cores adjacent in the axial direction is disposed in a state that the convex portion and the concave portion face each other in the axial direction.

8. The hub dynamo according to claim 7, wherein, in each of the iron cores, a pull-out groove for pulling out the coil wire to the outside is formed to be elongated in the diameter direction and the pull-out groove is formed in a position formed with the concave portion.

9. The hub dynamo according to any of claims 1 to 8, wherein the magnetic flux collector is an elongated plate member and the direction of the plate width of the plate member is oriented to the peripheral direction with respect to the iron core and subsidiary ion core.

10. The hub dynamo according to claim 9, wherein the magnetic flux collector is formed so that the cross-sectional area thereof becomes larger toward a connecting portion with the iron core.

11. The hub dynamo according to claim 9 or 10, wherein the magnetic flux collector is formed so that the width of the plate becomes wider toward a connecting portion with the iron core.

12. The hub dynamo according to any of claims 1 to 11, wherein the sub iron core is formed with a plurality of thin plate members being laminated.

13. The hub dynamo according to any of claims 1 to 12, wherein the main iron core is formed with a plurality of thin plate members being laminated.
